# EUROPÄISCHE PATENTANMELDUNG

(11) **EP 0 613 027 A1**
(43) Veröffentlichungstag der Anmeldung: **31.08.1994**
(21) Anmeldenummer: 93890028.9
(22) Anmeldetag: 25.02.1993
(51) Int. Cl.: G01V 3/08

(54) **Verfahren und Einrichtung zur Feststellung vorbestimmter Materialien im Erdboden**

(71) Anmelder: PROTERRA GESELLSCHAFT FÜR UMWELTTECHNIK GESELLSCHAFT m.b.H., A-1210 Wien (AT)
(72) Erfinder: Geutebrück, Ernst, Dr., A-1210 Wien (AT)
(74) Vertreter: Hamburger, Walter A., Dipl.-Ing.

(57) **Zusammenfassung**

Verfahren und Einrichtung zur Feststellung vorbestimmter Materialien im Erdboden, bei welchem mittels Sonden an vorbestimmten Meßstellen das Potential gemessen und in digitale elektrische Signale umgesetzt wird, die Signale an eine zentrale Recheneinheit übertragen, in dieser verarbeitet und sodann angezeigt und/oder registriert werden, wobei die Sonden in einem flächenhaften Bereich in mehreren Reihen und in diesen in angenähert gleichen gegenseitigen Abständen angeordnet werden, der gegenseitige Abstand der Reihen der im Erdboden angeordneten Meßstellen im wesentlichen dem gegenseitigen Abstand der Meßstellen in den Reihen entspricht und die Potentialdifferenzen jeweils zwischen zwei in derselben Reihe liegenden Meßstellen sowie zwischen zwei in verschiedenen Reihen liegenden Meßstellen, vorzugsweise zwischen allen Meßstellen bestimmt werden.

## Beschreibung

Die Erfindung betrifft ein Verfahren zur Feststellung vorbestimmter Materialien im Erdboden, bei welchem an vorbestimmten Meßstellen das Potential gemessen und in digitale elektrische Signale umgesetzt wird, die Signale an eine zentrale Recheneinheit übertragen, in dieser verarbeitet und sodann angezeigt und/oder registriert werden, wobei die Meßstellen in einem flächenhaften Bereich in mehreren Reihen und in diesen in angenähert gleichen gegenseitigen Abständen angeordnet werden und wobei vorzugsweise die digitalen elektrischen Signale an den Meßstellen gespeichert und von der zentralen Recheneinheit in vorbestimmter Reihenfolge abgefragt werden.

Weiters betrifft die Erfindung eine Einrichtung zur Durchführung des Verfahrens, mit elektrischen Sonden, die jeweils einen Meßwertgeber aufweisen und über einen Analog-Digital-Wandler sowie einen Übertragungskanal an eine Auswertestelle angeschlossen sind, wobei die Sonden in einem flächenhaften Bereich in mehreren Reihen und in diesen in angenähert gleichen gegenseitigen Abständen angeordnet sind, jede Sonde mit einer in ihrer Nähe angeordneten, an den Meßwertgeber angeschlossenen Abfragestufe verbunden ist, und wobei die Auswertestelle eine zentrale Recheneinheit sowie eine mit den Abfragestufen über den Übertragungskanal verbundene zentrale Abfragestelle aufweist.

Ein derartiges Verfahren und eine derartige Einrichtung zur Bestimmung der Grenzen von mit Kohlenwasserstoffen gefüllten unterirdischen Lagerstätten sind aus der DE-A1-35 29 466 bekannt.

Ein besonderes Problem der jüngeren Zeit liegt in der Feststellung von Abfallstoffen im Erdboden, da in früheren Jahren Deponierungen gefährlicher Materialien meist sorglos durchgeführt worden sind und in der Zwischenzeit zu einer erheblichen Kontamination des Erdbodens geführt haben. Es liegt im Sinne des Umweltschutzes, solche Kontaminationen beseitigen bzw. solche Deponien zu sanieren. Weiters sind unzulänglich gesicherte Deponien angelegt worden, die heutzutage ebenfalls aus Umweltschutzgründen entsorgt werden müssen (sogenannte Altlasten).

Dies wirft heutzutage die Probleme auf, Lage und Größe einer Deponie sowie die Art der deponierten Abfälle und das Ausmaß der Kontamination des Erdbodens festzustellen. Ein weiteres Problem liegt in sogenannten wilden Deponien, deren Lage oftmals nur ungenau bekannt ist und die es aufzuspüren gilt.

Desgleichen haben Unfälle von Transportfahrzeugen für Öl oder Chemikalien meist eine Kontamination von Erdreich zur Folge, wobei gleichfalls das Problem besteht, die Ausbreitung der Kontaminationen festzustellen, um Gegenmaßnahmen ergreifen zu können.

Folglich besteht ein großes gesellschaftliches Bedürfnis nach einer Lösung dieser Probleme.

Ziel der Erfindung ist die Befriedigung dieses Bedürfnisses und die Beseitigung, zumindest aber die Verringerung der vorstehenden Probleme auf ein Minimum.

Der Erfindung liegt daher die Aufgabe zugrunde, ein Verfahren und eine Einrichtung zu schaffen, mit dem bzw. mit der sich vorbestimmte, insbesondere umweltgefährliche Materialien im Erdboden feststellen lassen.

Zur Suche von Erz- und Erdöllagerstätten sind zwar geophysikalische Aufschlußverfahren, sogenannte geoelektrische Verfahren bekannt, mit denen aus der gemessenen Verteilung von im Erdboden fließenden elektrischen Strömen Aussagen über den Aufbau des Untergrundes gewonnen werden. Diese geoelektrischen Verfahren lassen sich in elektromagnetische und in Potentialverfahren einteilen, und diese wiederum in Verfahren mit künstlicher und mit natürlicher Stromzufuhr.

Bei all diesen Verfahren werden in der Regel Messungen zwischen einer ortsfesten Basissonde und einer sogenannten Wandersonde durchgeführt. Weiters ist auch bekannt, einige Sonden entlang einer im wesentlichen geraden Linie anzuordnen und jeweils über ein Kabel an die Basissonde anzuschließen. Die von den Sonden erfaßten Meßwerte werden in analoger Form einer Auswertestelle zugeleitet, dort verarbeitet und ausgewertet.

Nachteilig hiebei ist, daß nur sehr wenige Meßwerte erfaßt werden, daß die Meßwertübertragung in analoger Form störanfällig Rauschen, Nebensprechen od.dgl. ist und zu verfälschten Ergebnissen führen kann. Da im Fall mehrerer Sonde jede über ein eigenes Kabel mit der Auswertestelle verbunden ist, ist der Aufwand an Kabeln beträchtlich.

Die Durchführung von Messungen an relativ wenigen Meßstellen bzw. Sondenplätzen fällt beim Aufschluß von Erz- oder Erdöllagerstätten nicht besonders ins Gewicht, da die Lagerstätten eine verhältnismäßig große Ausdehnung und im wesentlichen homogene Zusammensetzung besitzen.

Die Erfindung macht sich die auf dem Bergbaugebiet bekannten Verfahren und Einrichtungen zunutze, die aber in ihrer bestehenden Form zur Feststellung von Kontaminationen des Erdbodens, zum Aufspüren von Deponien im Untergrund oder zum Aufschluß über Größe und Gefährlichkeit weder geeignet noch anwendbar sind, weil oftmals z.B. aus einem Faß ausgelaufener flüssiger Giftstoff nur einen eng begrenzten Bereich des Untergrundes kontaminiert.

Die vorstehend genannte Aufgabe wird einerseits mit einem Verfahren der eingangs dargelegten Art dadurch gelöst, daß erfindungsgemäß der gegenseitige Abstand der Reihen der im Erdboden angeordneten Meßstellen im wesentlichen dem gegenseitigen Abstand der Meßstellen in den Reihen entspricht, und daß die Potentialdifferenzen jeweils zwischen zwei in derselben Reihe liegenden Meßstellen sowie zwischen zwei in verschiedenen Reihen liegenden Meßstellen, vorzugsweise zwischen allen Meßstellen bestimmt wird.

Anderseits wird die gestellte Aufgabe mit einer Einrichtung der eingangs angegebenen Art dadurch gelöst, daß erfindungsgemäß der gegenseitige Abstand der Reihen der im Erdboden angeordneten, vorzugsweise jeweils über ein Filter an die Abfragestufe angeschlossenen Sonden im wesentlichen dem gegenseitigen Abstand der Sonden in den Reihen entspricht.

Auf diese Weise schafft die Erfindung ein Verfahren und eine Einrichtung zur Feststellung vorbestimmter Materialien, insbesondere umweltgefährlicher Stoffe im Erdboden. In der Praxis werden die Sonden nicht nur rasterförmig, sondern auch in kürzeren gegenseitigen Abständen angeordnet als dies bei den im Bergbau angewandten Verfahren der Fall ist. Somit können in kürzester Zeit Angaben über die Bodenbeschaffenheit in dem untersuchten Bereich gemacht und die nötigen Maßnahmen ergriffen werden. Durch die Abfrage von der zentralen Recheneinheit wird die eindeutige Zuordnung der Meßwerte zu den Meßstellen gewährleistet.

In vorteilhafter Weiterbildung des erfindungsgemäßen Verfahrens kann außerhalb des flächenhaften Bereiches wenigstens eine zusätzliche Bezugsmeßstelle angeordnet werden, wodurch die Auswertung der Meßerte verbessert wird.

Von Vorteil ist ferner, wenn in zeitlicher Reihenfolge aus sämtlichen Meßstellen jeweils eine als Bezugsmeßstelle ausgewählt wird und die Potentialdifferenzen auf jeweils eine der Bezugsmeßstellen bezogen werden.

Um weitere Störungen auszuschließen, werden bevorzugterweise die Meßstellen und die Bezugsmeßstellen örtlich vertauscht, jeweils die beiden einander zugeordneten Potentialdifferenzen voneinander subtrahiert und diese Differenzen weiterverarbeitet.

Vorteilhaft ist außerdem, wenn die Auswahl der Meßstellen als Bezugsmeßtelle durch Ansteuerung durch die zentrale Recheneinheit erfolgt. Dies erlaubt eine flexiblere Meßwerterfassung.

Eine besonders vorteilhafte Ausführungsform der Erfindung zeichnet sich dadurch aus, daß den digitalen elektrischen Signalen abgestufte Größenbereiche zugeordnet werden und daß die Anzeige als zweidimensionale Darstellung mit zusätzlicher Kennzeichnung gemäß den Größenbereichen erfolgt.

Günstig ist ferner, wenn die Übertragung der elektrischen Signale an die zentrale Recheneinheit drahtlos erfolgt.

Schließlich kann die Bestimmung der Potentialdifferenzen nach einem vorbestimmten Zeitraum, gegebenenfalls periodisch wiederholt werden, wodurch sich Veränderungen im Untergrund jederzeit feststellen lassen.

In vorteilhafter weiterer Ausgestaltung der erfindungsgemäßen Einrichtung kann daß jeder Sonde eine Datenspeichereinrichtung zugeordnet sein, wobei der Analog-Digital-Wandler und die Datenspeichereinrichtung von einem Mikroprozessor gesteuert sind. Auf diese Weise ist die Einrichtung gegen Störungen praktisch unanfällig, und die Meßwerte stehen jederzeit zur Verfügung.

Der Übertragungskanal kann als Funkstrecke ausgebildet sein, was insbesondere in unwegsamem Gelände günstig ist.

Zur Verbesserung der Feststellbarkeit der Materialien und der Auswertung der Meßwerte kann eine zusatzliche Bezugssonde vorgesehen sein, die außerhalb des flächenhaften Bereiches angeordnet und an die zentrale Recheneinheit angeschlossen ist.

Weiters ist zweckmäßig, wenn die Sonden mit einer eingebauten elektrischen Energiequelle ausgestattet sind, weil keine Energieverluste wie im Falle einer zentralen Energieversorgung auftreten und sie im Dauerbetreib verhältnismäßig lange Zeit in situ verbleiben können.

Die Erfindung wird nachstehend anhand eines bevorzugten Ausführungsbeispieles der Einrichtung näher erläutert, das in den Zeichnungen schematisch dargestellt ist; es zeigen Fig. 1 den grundsätzlichen Aufbau der Einrichtung samt dem Schaltungsaufbau der Sonden und Fig. 2 und 3 je eine typische Darstellung der verarbeiteten Meßwerte.

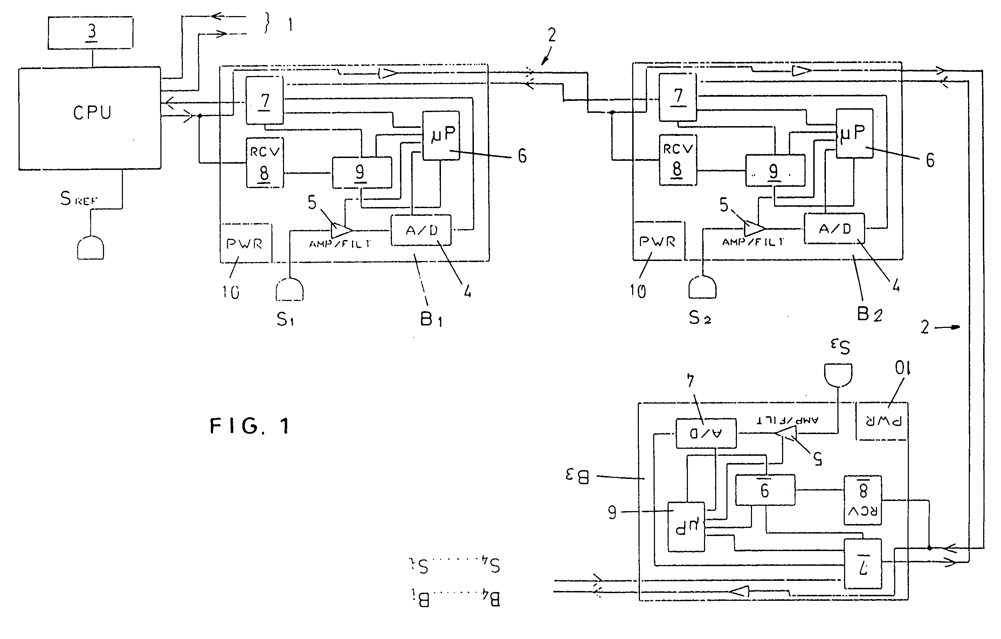

Gemäß Fig. 1 werden in einem zu untersuchenden Terrain in einem flächenhaften Bereich rasterförmig Sonden angeordnet, von denen jedoch nur drei Sonden S₁, S₂ und S₃ gezeigt sind. Die Sonden S sind gruppenweise über von Kabeln 1, 2 gebildete Übertragungskanäle untereinander verbunden sowie an eine zentrale Recheneinheit CPU angeschlossen. Zweckmäßig werden die Sonden Sᵢ in dem flächenhaften Bereich in gleichen Abständen angeordnet, sodaß sich ein quadratischer Raster mit Längs- und Querreihen ergibt, wobei die Sonden Sᵢ einer Längs- oder Querreihe jeweils über eines der Kabel untereinander verbunden sind (Kabel 2 in Fig. 1).

An die zentrale Recheneinheit CPU sind ferner eine außerhalb des flächenhaften Bereiches angeordnete Bezugssonde S_{REF} und ein Peripheriegerät 3, insbesondere ein Zeichengerät angeschlossen.

Die Sonden Sᵢ sind in besonderer Weise ausgebildet bzw. jeweils mit einer Schaltungsanordnung Bᵢ kombiniert. Jede dieser Schaltungsanordnung Bi weist einen Analog-Digital-Wandler 4 auf, der über einen Verstärker samt Filter 5 mit dem Meßwertgeber der Sonde verbunden und von einem Mikroprozessor 6 gesteuert ist. Der Ausgang des Analog-Digital-Wandlers 4 ist an eine von einer Abfragestelle der zentralen Recheneinheit CPU gesteuerte Abfragestufe 7, 8 angeschlossen, die den Mikroprozessor 6 steuert. Weiters besitzt jede Schaltungsanordnung Bᵢ eine Datenspeichereinrichtung 9 in Form eines Pufferspeichers, der die vom Analog-Digital-Wandler 4 abgegebenen digitalen Daten über den Sender 7 der Abfragestufe 7, 8 zugeführt werden und die an den Empfänger 8 der Abfragestufe 7, 8 angeschlossen ist.

Vorteilhafterweise ist jede Schaltungsanordnung Bᵢ mit einer eingebauten elektrischen Energiequelle 10 versehen.

Die Sonden Sᵢ sind derart untereinander verbunden, daß ihre Empfänger 8 an die Sendeleitung des Kabels 2 und ihre Sender 7 jeweils an den Sender 7 der benachbarten, der zentralen Recheneinheit CPU näherliegenden Sonde Sᵢ angeschlossen sind, wobei der Sender 7 der der zentralen Recheneinheit CPU am nächsten liegenden Sonde S₁ mit der Empfangsleitung der zentralen Recheneinheit CPU verbunden ist.

Die von den Meßwertgebern der Sonden Sᵢ erfaßten Meßwerte, wie der Erdströme oder Erdpotentiale, werden also verstärkt und gefiltert und im Analog-Digital-Wandler 4 in digitale Daten umgesetzt, die in der Datenspeichereinrichtung 9 gespeichert und zu vorbestimmten Zeiten von der Abfragestelle der zentralen Recheneinheit CPU abgefragt werden. In der zentralen Recheneinheit CPU werden die Daten vorzugsweise auf Diskette gespeichert, weiterverarbeitet und schließlich angezeigt und/oder registriert. Zu diesem Zweck ist an die zentrale Recheneinheit CPU das Peripheriegerät 3 angeschlossen, das ein Monitor und/oder ein Drucker und/oder ein Zeichengerät ist. Insbesondere werden den Daten vorbestimmte Größenbereiche zugeordnet, sodaß die Anzeige z.B. übersichtlicher gestaltet werden, farbig erfolgen, zur Angabe des Über- oder Unterschreitens vorbestimmter Grenzwerte und auch als dreidimensionale Darstellung erfolgen kann.

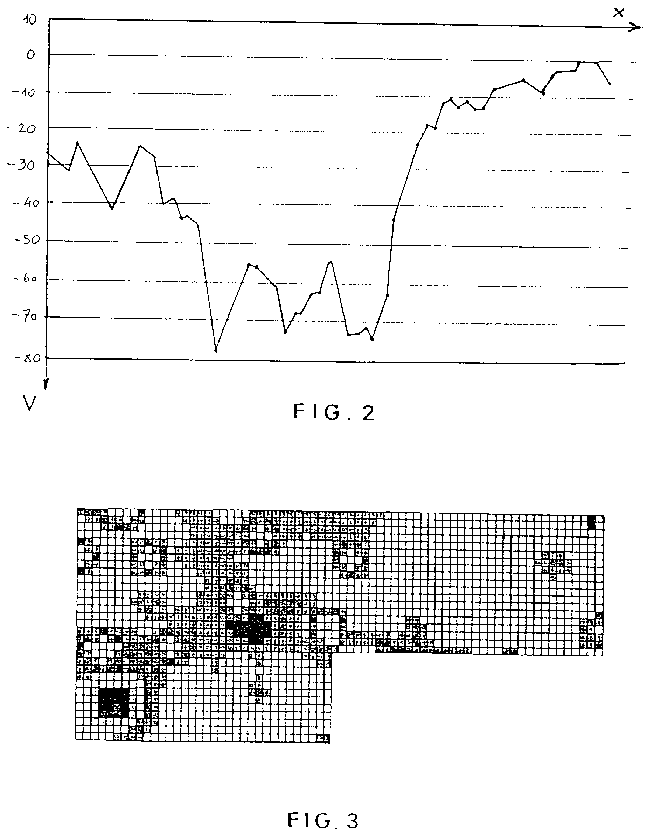

Beispiele solcher Anzeigen bzw. Darstellungen zeigen die Fig. 2 und 3.

Fig. 2 zeigt Meßergebnisse des Erdpotentiales V, die entlang einer Längs- oder Querreihe des Sondenrasters in der Entfernung x erhalten worden sind. Eine gleiche Darstellung ergibt sich, falls zeitliche Änderungen des Untergrundes erfaßt werden. Dabei entspricht die Rasterreihe einem Kabel.

Fig. 3 zeigt eine dreidimensionale Darstellung eines flächenhaften Bereiches eines kontaminierten Terrains, wobei die unterschiedlich dunklen Kästchen der Darstellung in der Praxis verschieden gefärbt sind und die einzelnen Farben verschiedenen Kontaminationsgraden entsprechen.

Obwohl die Erfindung im Hinblick auf die Feststellung kontaminierender, umweltgefährlicher Stoffe im Erdboden beschrieben ist, ist für den Fachmann ohne weiteres ersichtlich, daß die Erfindung nicht auf dieses technische Gebiet beschränkt, sondern vielmehr auch zur Feststellung beliebiger anderer Materialien anwendbar ist.

In erster Linie ist die Erfindung allerdings dafür vorgesehen, durch Schadstoffe hervorgerufene Anomalien im Erdboden aufzufinden, ihre Grenzen sowie allfällige "Fahnen", d.s. lange und schmale Kontaminationszonen festzustellen und Leckagen von Deponien zu untersuchen, die etwa durch Folienrisse entstanden sind.

Die Erfindung bietet die Vorteile, daß flächenhafte Bereiche des Erdbodens wesentlich genauer und detaillierter als bisher untersucht werden können, wobei äußere, störende Einflüsse praktisch ausgeschlossen sind. Bei der Untersuchung des Bereiches können Messungen jeweils zwischen zwei beliebigen einer großen Anzahl Sonden durchgeführt werden, Der Aufbau der Einrichtung ermöglicht die Verwendung leichterer und kürzerer Kabel, kleinere Kammeltrommeln, die genaue Zuordnung der Sonden zu ihrem Standort und ihren Meßwerten, die wiederholte Abfrage der Meßwerte und die dauernde Überwachung eines Bereiches, der auch gefährlich sein kann, sodaß der Aufenthalt von Bedienungspersonal entbehrlich ist und diese Personen keiner Gefahr ausgesetzt werden. Schließlich läßt sich die Erfindung auch in seichten Gewässern anwenden.

## Patentansprüche

1. Verfahren zur Feststellung vorbestimmter Materialien im Erdboden, bei welchem an vorbestimmten Meßstellen das Potential gemessen und in digitale elektrische Signale umgesetzt wird, die Signale an eine zentrale Recheneinheit übertragen, in dieser verarbeitet und sodann angezeigt und/oder registriert werden, wobei die Meßstellen in einem flächenhaften Bereich in mehreren Reihen und in diesen in angenähert gleichen gegenseitigen Abständen angeordnet werden und wobei vorzugsweise die digitalen elektrischen Signale an den Meßstellen gespeichert und von der zentralen Recheneinheit in vorbestimmter Reihenfolge abgefragt werden, dadurch gekennzeichnet, daß der gegenseitige Abstand der Reihen der im Erdboden angeordneten Meßstellen im wesentlichen dem gegenseitigen Abstand der Meßstellen in den Reihen entspricht, und daß die Potentialdifferenzen jeweils zwischen zwei in derselben Reihe liegenden Meßstellen sowie zwischen zwei in verschiedenen Reihen liegenden Meßstellen, vorzugsweise zwischen allen Meßstellen bestimmt wird.

2. Verfahren nach Anspruch 1, bei dem wenigstens eine zusätzliche Bezugsmeßstelle verwendet wird, dadurch gekennzeichnet, daß jede Bezugsmeßstelle außerhalb des flächenhaften Bereiches angeordnet wird.

3. Verfahren nach Anspruch 1 oder 2, dadurch gekennzeichnet, daß in zeitlicher Reihenfolge aus sämtlichen Meßstellen jeweils eine als Bezugsmeßstelle ausgewählt wird und daß die Potentialdifferenzen auf jeweils eine der Bezugsmeßstellen bezogen werden.

4. Verfahren nach Anspruch 3, dadurch gekennzeichnet, daß die Meßstellen und die Bezugsmeßstellen örtlich vertauscht werden, jeweils die beiden einander zugeordneten Potentialdifferenzen voneinander subtrahiert und diese Differenzen weiterverarbeitet werden.

5. Verfahren nach Anspruch 3 oder 4, dadurch gekennzeichnet, daß die Auswahl der Meßstellen als Bezugsmeßstelle durch Ansteuerung durch die zentrale Recheneinheit erfolgt.

6. Verfahren nach den Ansprüchen 1 bis 5, dadurch gekennzeichnet, daß den digitalen elektrischen Signalen abgestufte Größenbereiche zugeordnet werden und daß die Anzeige als zweidimensionale Darstellung mit zusätzlicher Kennzeichnung gemäß den Größenbereichen erfolgt.

7. Verfahren nach den Ansprüchen 1 bis 6, dadurch gekennzeichnet, daß die Übertragung der elektrischen Signale an die zentrale Recheneinheit drahtlos erfolgt.

8. Verfahren nach den Ansprüchen 1 bis 7, dadurch gekennzeichnet, daß die Bestimmung der Potentialdifferenzen nach einem vorbestimmten Zeitraum, gegebenenfalls periodisch wiederholt wird.

9. Einrichtung zur Durchführung des Verfahrens nach den Ansprüchen 1 bis 9, mit elektrischen Sonden, die jeweils einen Meßwertgeber aufweisen und über einen Analog-Digital-Wandler sowie einen Übertragungskanal an eine Auswertestelle angeschlossen sind, wobei die Sonden in einem flächenhaften Bereich in mehreren Reihen und in diesen in angenähert gleichen gegenseitigen Abständen angeordnet sind, jede Sonde mit einer in ihrer Nähe angeordneten, an den Meßwertgeber angeschlossenen Abfragestufe verbunden ist, und wobei die Auswertestelle eine zentrale Recheneinheit sowie eine mit den Abfragestufen über den Übertragungskanal verbundene zentrale Abfragestelle aufweist, dadurch gekennzeichnet, daß der gegenseitige Abstand der Reihen der im Erdboden angeordneten, vorzugsweise jeweils über ein Filter an die Abfragestufe (7,8) angeschlossenen Sonden (S₁,S₂,S₃...) im wesentlichen dem gegenseitigen Abstand der Sonden (S₁,S₂,S₃...) in den Reihen entspricht.

10. Einrichtung nach Anspruch 9, dadurch gekennzeichnet, daß jeder Sonde (S₁,S₂,S₃...) eine Datenspeichereinrichtung (9) zugeordnet ist, wobei der Analog-Digital-Wandler (4) und die Datenspeichereinrichtung (9) von einem Mikroprozessor (6) gesteuert sind.

11. Einrichtung nach Anspruch 9 oder 10, dadurch gekennzeichnet, daß der Übertragungskanal als Funkstrecke ausgebildet ist.

12. Einrichtung nach den Ansprüchen 9 bis 11, mit wenigstens einer zusätzlichen Bezugssonde, dadurch gekennzeichnet, daß die Bezugssonde (S_{REF}) außerhalb des flachenhaften Bereiches angeordnet ist.

13. Einrichtung nach den Ansprüchen 10 bis 14, dadurch gekennzeichnet, daß die Sonden (S₁,S₂,S₃...) mit je einer eingebauten elektrischen Energiequelle (10) ausgestattet sind.
